# EUROPEAN PATENT APPLICATION

(11) **EP 4 678 434 A1**
(43) Date of publication of application: **14.01.2026**
(21) Application number: 24187409.8
(22) Date of filing: 09.07.2024
(51) Int. Cl.: B60K 1/00, B60K 17/16

(54) **DRIVE UNIT FOR AN ELECTRIC VEHICLE AND VEHICLE COMPRISING SUCH A DRIVE UNIT**

(71) Applicant: VOLVO TRUCK CORPORATION, 405 08 Göteborg (SE)
(72) Inventor: Hedman, Anders, 442 67 MARSTRAND (SE); Norberg, Sven, 422 47 HISINGS BACKA (SE)
(74) Representative: Lavoix

(57) **Abstract**

A drive (20) unit for an electric vehicle (10) comprises an electric motor (24), a differential (30), a transmission (38) and drive shafts (26, 28). The transmission comprises a planetary gear train (52) and a carrying structure (40), both coaxial with the drive shafts. The differential and the planetary gear train are mounted inside of the carrying structure. The carrying structure is driven by the electric motor and drives the planetary gear train. The transmission comprises a shift assembly (64), comprising a shift ring (66) coaxially mounted around the carrying structure, axially moveable and rotationally fixed relative to the carrying structure. The shift assembly is configured to cooperate with an input member of the planetary gear train so as to engage or disengage the input member with the carrying structure depending on the axial position of the shift ring relative to the carrying structure.

## Description

### TECHNICAL FIELD

The disclosure relates generally to electromobility applied to heavy-duty vehicles. In particular aspects, the disclosure relates to a drive unit for an electric vehicle and a vehicle comprising such a drive unit. The disclosure can be applied to heavy-duty vehicles, such as trucks, buses, and construction equipment, and also to other vehicle types, such as automobiles, among other vehicle types. Although the disclosure may be described with respect to a particular vehicle, the disclosure is not restricted to any particular vehicle.

### BACKGROUND

To decrease environmental impacts of heavy-duty vehicles, transport industry is moving towards electro mobility to replace internal combustion engines by electric motors. Traditionally, the electric motor is positioned in the same place as the internal combustion engine it replaces, i.e. under the truck cab, and may use a transmission.

However, positioning one or more electric motors as close as possible to the wheels, directly on their axle, is advantageous. Such configuration is known as electric axle, or "E-axle", configuration and improves performance of the vehicle, by reducing losses in the transmission. In addition, such a configuration is more compact, freeing up space available for batteries.

One of the challenges for such a configuration is to make the electric axle as compact as possible, so as not to interfere with other vehicle features, such as the suspension or braking system. The invention aims to provide a particularly compact drive unit.

### SUMMARY

According to a first aspect of the disclosure, a drive unit, for an electric vehicle, comprises:
- an electric motor,
- a left drive shaft and a right drive shaft, configured to drive wheels of the electric vehicle,
- a differential, coaxially mounted with the left and right drive shafts and configured to drive the left and right drive shafts, and
- a transmission, connected to the electric motor and to the differential so as to be driven by the electric motor and so as to drive the differential.
Furthermore, the transmission comprises:
- a carrying structure, coaxially mounted around the left and right drive shafts, the carrying structure being connected to the electric motor so as to be driven by the electric motor,
- a planetary gear train, coaxially mounted around one of the left and right drive shafts, the planetary gear train comprising:
   ∘ a first input member, selectively engageable and disengageable with the carrying structure,
   ∘ a second input member, selectively engageable and disengageable with the carrying structure, and
   ∘ an output member, connected to the differential so as to drive the differential, the output member engaging with the first input member and with the second input member,
- a shift assembly, comprising a shift ring, the shift ring being coaxially mounted around the carrying structure, the shift ring being mounted to the carrying structure so as to be axially moveable relative to the carrying structure and rotationally fixed relative to the carrying structure, the shift assembly being configured to cooperate with the first input member of the planetary gear train so as to engage or disengage the first input member with the carrying structure depending on the axial position of the shift ring relative to the carrying structure.
The differential and the planetary gear train are mounted inside of the carrying structure.

The first aspect of the disclosure may seek to improve the axial compactness of the drive unit. Indeed, the first input member of the planetary gear train does not require an actuator located axially on a side of the planetary gear train, thanks to the carrying structure and the shift assembly allowing to engage and disengage the first input member. A technical benefit may include reducing the conflict with other components of the electric vehicle, such as the suspension or braking system.

Optionally in some examples, including in at least one preferred example, the drive unit further comprises a housing and the first input member and the second input member are both selectively engageable and disengageable with the housing. A technical benefit may include allowing the planetary gear train to benefit from more gear ratios.

Optionally in some examples, including in at least one preferred example, the drive unit further comprises bearings with which the carrying structure is rotatably mounted on the housing of the drive unit. A technical benefit may include allowing the carrying structure to efficiently rotate relative to the housing.

Optionally in some examples, including in at least one preferred example, the shift ring is moveable between three positions: a first position, in which the first input member is engaged with the carrying structure, a second position, in which the input member is engaged with the housing, and a neutral position, in which the first input member is disengaged with the carrying structure and disengaged with the housing. A technical benefit may include allowing the planetary gear train to benefit from more gear ratios.

Optionally in some examples, including in at least one preferred example, the first input member is a ring gearwheel of the planetary gear train, the second input member is a sun gearwheel of the planetary gear train and the output member is a planet carrier of the planetary gear train. A technical benefit may include optimizing the compactness of the drive unit, by operating with the shift assembly the least easily accessible member of the planetary gear train.

Optionally in some examples, including in at least one preferred example, the transmission further comprises a gear train, connected to the electric motor so as to be driven by the electric motor and the carrying structure comprises a gearwheel, engaging with the gear train so as to be driven by the gear train. A technical benefit may include obtaining a better reduction ratio between the electric motor and the planetary gear train.

Optionally in some examples, including in at least one preferred example, the shift assembly comprises an actuator engaging with the shift ring, the actuator being moveable so as to axially move the shift ring relative to the carrying structure. A technical benefit may include facilitating operation of the shift assembly.

Optionally in some examples, including in at least one preferred example, the actuator comprises a shift fork. A technical benefit may include allowing easy and reliable operation of the shift assembly with a readily available actuator.

Optionally in some examples, including in at least one preferred example, the first input member is axially moveable relative to the carrying structure and the shift assembly is configured to axially move the first input member relative to the carrying structure so as to engage or disengage the first input member with the carrying structure. A technical benefit may include reducing the complexity of the drive unit by reducing the number of parts of the transmission.

Optionally in some examples, including in at least one preferred example, the first input member comprises a planetary input member and an engaging sleeve, the planetary input member is concentrically mounted inside of the carrying structure, engaging with the output member and axially fixed relative to the carrying structure, and the engaging sleeve is concentrically mounted inside of the carrying structure and axially moveable relative to the carrying structure so as to be selectively engageable and disengageable with the carrying structure. Furthermore, the engaging sleeve engages with the planetary input member so as to be rotationally fixed relative to the planetary input member and the shift assembly is configured to axially move the engaging sleeve so as to engage or disengage the engaging sleeve with the carrying structure. A technical benefit may include increasing the reliability of the planetary gear train by avoiding relative axial movements between the planetary input member and the output member and increasing the axial compactness of the drive unit.

Optionally in some examples, including in at least one preferred example, the engaging sleeve engages with the planetary input member through a spline joint of the first input member. A technical benefit may include ensuring easy-to-implement and reliable engagement between the engaging sleeve and the planetary input member.

Optionally in some examples, including in at least one preferred example, the carrying structure comprises an axial slot and the shift assembly extends through the axial slot to cooperate with the first input member of the planetary gear train. A technical benefit may include allowing the shift assembly to cooperate both with the first input member, within the carrying structure, and with an actuator axially moving the shift ring and located outside of the carrying structure.

Optionally in some examples, including in at least one preferred example, the shift assembly comprises a sliding assembly fixed to the shift ring and extending from the shift ring through the axial slot of the carrying structure so as to be received inside of the carrying structure, the sliding assembly being configured to cooperate with the first input member so as to engage or disengage the first input member with the carrying structure. A technical benefit may include allowing reliable engagement of the shift assembly with the first input member.

Optionally in some examples, including in at least one preferred example, the sliding assembly comprises sliding pads, received inside of the carrying structure and configured to cooperate with the first input member so as to engage or disengage the first input member with the carrying structure, and fasteners, the fasteners extending through the axial slot and fixing together the sliding pads and the shift ring. A technical benefit may include reducing friction between the sliding assembly and the first input member thanks to the sliding pads, thus increasing the performance of the drive unit, and facilitating assembly of the drive unit.

Optionally in some examples, including in at least one preferred example, the first input member is axially moveable relative to the carrying structure and the sliding assembly directly engages with the first input member, or with the engaging sleeve, so as to axially move the first input member, or the engaging sleeve, to engage or disengage the first input member, or the engaging sleeve, with the carrying structure. A technical benefit may include allowing the sliding assembly to efficiently move the first input member, or the engaging sleeve.

Optionally in some examples, including in at least one preferred example, the first input member comprises a groove in which the sliding assembly is received and the sliding assembly directly engages with the groove so as to axially move the first input member, or the engaging sleeve, to engage or disengage the first input member, or the engaging sleeve, with the carrying structure. A technical benefit may include allowing the sliding assembly to efficiently move the first input member, or the engaging sleeve.

Optionally in some examples, including in at least one preferred example, the carrying structure comprises a cylindrical portion, around which the shift ring is coaxially mounted, and an end plate, fixed to the cylindrical portion and closing an axial extremity of the cylindrical portion, one of the left and right drive shafts extending through the end plate and wherein the axial slot is formed in the cylindrical portion of the carrying structure and opens out at said axial extremity of the cylindrical portion. A technical benefit may include facilitating the assembly of the drive unit by allowing the planetary gear train and the differential to be inserted inside of the cylindrical portion before fixing the end plate to close the axial extremity of the cylindrical portion. Another technical benefit may include facilitating the assembly of the shift assembly onto the carrying structure.

Optionally in some examples, including in at least one preferred example, the carrying structure comprises a cylindrical portion, around which the shift ring is coaxially mounted, and an end plate, fixed to the cylindrical portion and closing an axial extremity of the cylindrical portion, one of the left and right drive shafts extending through the end plate. A technical benefit may include facilitating the assembly of the drive unit by allowing the planetary gear train and the differential to be inserted inside of the cylindrical portion before fixing the end plate to close the axial extremity of the cylindrical portion.

Optionally in some examples, including in at least one preferred example, the end plate is conical. A technical benefit may include increasing the axial stiffness of the end plate, thus making the drive unit more robust.

According to a second aspect of the disclosure, an electric vehicle comprises a left wheel, a right wheel and the drive unit described here above, the left wheel and the right wheel being driven respectively by the left drive shaft and by the right drive shaft of the drive unit. The second aspect of the disclosure may seek to increase the available space in the vehicle and reduce conflict between the drive unit and other components of the vehicle. A technical benefit may include allowing the vehicle to have more batteries and facilitating the assembly of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a view combining a schematic view and a top view of an exemplary vehicle comprising a drive unit according to an example, the drive unit being in a neutral configuration.
**FIG. 2** is a schematic view of the vehicle of Figure 1, the drive unit being in a first configuration.
**FIG. 3** is a schematic view of the vehicle of Figure 1, the drive unit being in a second configuration.
**FIG. 4** is a schematic view of the vehicle of Figure 1, the drive unit being in a third configuration.
**FIG. 5** is a schematic view of another exemplary vehicle comprising a drive unit according to another example, the drive unit being in a neutral configuration.
**FIG. 6** is a schematic view of another exemplary vehicle comprising a drive unit according to another example, the drive unit being in a neutral configuration.
**FIG. 7** is a schematic view of another exemplary vehicle comprising a drive unit according to another example, the drive unit being in a neutral configuration, with a detail view of some parts of the driving unit.

### DETAILED DESCRIPTION

The detailed description set forth below provides information and examples of the disclosed technology with sufficient detail to enable those skilled in the art to practice the disclosure.

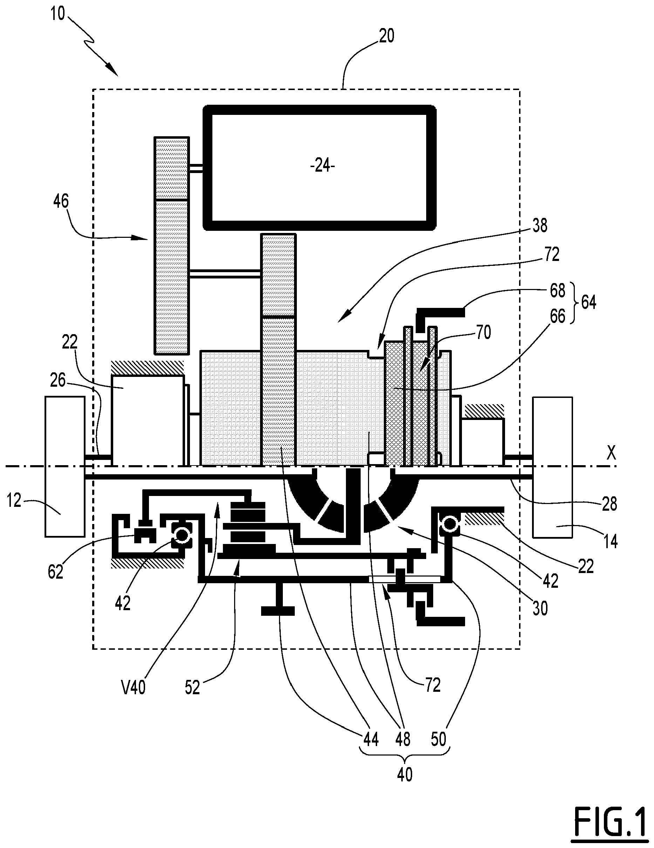

An electric vehicle 10 according to a first example is shown in Figures 1 to 4. The electric vehicle 10 is, for example, a heavy-duty vehicle, such as a truck, a bus or a construction equipment, or another type of vehicle, such as an automobile.

The electric vehicle 10 comprises a left wheel 12, a right wheel 14 and a drive unit 20 for driving the left wheel and the right wheel. The drive unit 20 is designed to be fitted on a chassis, not shown, of the electric vehicle 10. For example, the wheel drive unit 20 is designed to be fastened to a suspension system of the electric vehicle 10, which, itself, is fastened to the chassis.

The drive unit 20 comprises a main axis X, which is an axis of rotation of the left and right wheels 12, 14 of the electric vehicle 10.

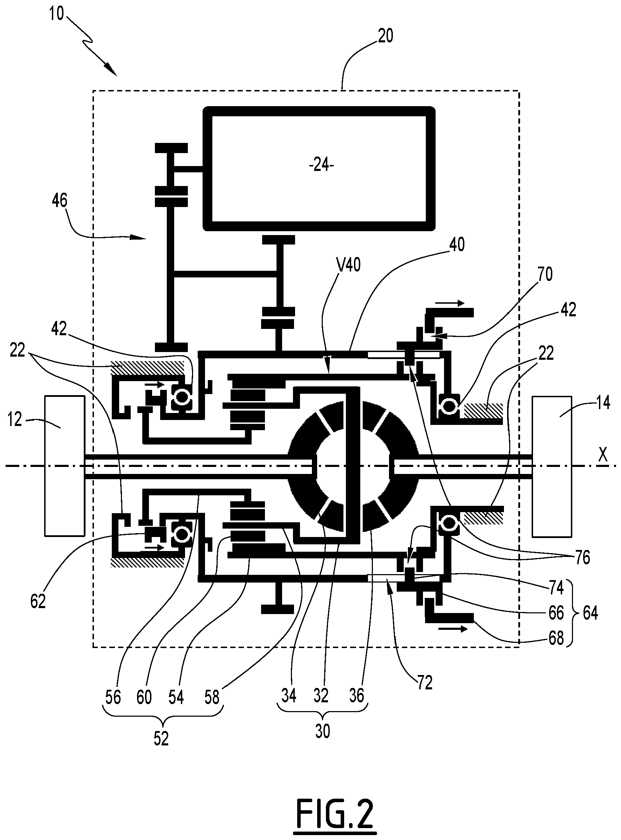

In Figure 1, the drive unit 20 is partially shown in top view, above the main axis X, and partially shown in schematic view, below the main axis X. In Figures 2 to 4, the drive unit 20 is entirely shown in schematic view.

The drive unit 20 comprises a housing 22, only shown schematically on the figures.

The drive unit 20 comprises an electric motor 24, only shown schematically, a left drive shaft 26, connected to the left wheel 12 to drive the left wheel, and a right drive shaft 28, connected to the right wheel 14 to drive the right wheel. Both left and right drive shafts 26, 28 extend along the main axis X and are able to rotate around the main axis X relative to the housing 22.

The drive unit 20 comprises a differential 30, coaxially mounted with the left and right drive shafts 26, 28, i.e. mounted around the main axis X. In a known manner, the differential 30 comprises an input member 32, driven by the electric motor 24 and two output members 34, 36, respectively connected to the left drive shaft 26 and to the right drive shaft 28. For example, the input member 32 is a carrier and the output members 34, 36 are pinions mounted on the left and right drive shafts 26, 28.

The drive unit 20 comprises a transmission 38, connected to the electric motor 24 and to the differential 30. The transmission 38 is configured to be driven by the electric motor 24 and to drive the differential 30, more precisely its input member 32. The differential 30 is configured to drive the left and right drive shafts 24, 26, i.e. to distribute torque delivered by the electric motor 24 via the transmission 38 to the left and right drive shafts 24, 26.

The transmission 38 comprises a carrying structure 40, coaxially mounted around the left and right drive shafts 26, 28, i.e. around the main axis X. The carrying structure 40 is able to rotate around the main axis X relative to the housing 22. In the example, the carrying structure 40 is mounted on the housing 22 with bearings 42. Hence, the carrying structure is rotatably mounted on the housing with the bearings 42.

The carrying structure 40 is connected to the electric motor 24 so as to be driven in rotation around the main axis X by the electric motor 24.

To this end, in the example, the carrying structure 40 comprises a gearwheel 44 and the transmission 38 comprises a gear train 46, or gear set, connected to the electric motor 24 and engaged with the gearwheel 44. The gear train 46 is configured to be driven by the electric motor 24 and to drive the gearwheel 44 in rotation around the main axis X. In the example of Figures 1-4, the gear train 46 comprises two reduction stages. As an alternative, not shown, the gear train 46 comprise only one reduction stage or more than two reduction stages. The gear train 46 is arranged so as to obtain a reduction ratio between the electric motor 24 and the carrying structure 40 adapted to the operation of the drive unit 20 in the electric vehicle 10. As an alternative, not shown, the carrying structure 40 is connected to the electric motors 24 by other mechanical components, instead or in addition of the gear train 46.

In other words, thanks to the gear train 46 connecting the electric motor 24 to the gearwheel 44, the carrying structure 40 is driven in rotation by the electric motor 24.

The carrying structure 40 defines an internal volume V40. In the example, the carrying structure 40 has the shape of a barrel, with a cylindrical portion 48, extending along the main axis X and on which the gearwheel 44 is mounted, and an end plate 50, closing an axial extremity of the cylindrical portion. Hence, the internal volume V40 is delimited radially by the cylindrical portion 48 and axially, on said axial extremity of the cylindrical portion, by the end plate 50. In the example of Figures 1-4, the cylindrical portion 48 and the end plate 50 are integral.

The differential 30 is mounted inside of the carrying structure 40, more precisely within the internal volume V40 of the carrying structure.

In the example of the figures, the end plate 50 is mounted on the housing 22 with one of the bearings 42. Furthermore, one of the left and right drive shafts 26, 28, in the example the right drive shaft 28, extends through the end plate 50. In the example of Figures 1 to 4, the end plate 50 is integral with the cylindrical portion 48.

The transmission 38 comprises a planetary gear train 52, or epicyclic gear train, coaxially mounted around the main axis X, more precisely coaxially mounted around one of the left and right drive shafts 26, 28. In the example, the planetary gear train 52 is mounted around the left drive shaft 26. Practically speaking, the planetary gear train 52 is mounted around the drive shaft 26, 28 opposite to the end plate 50 of the carrying structure 40.

The planetary gear train 52 is mounted inside of the carrying structure 40, more precisely within the internal volume V40 of the carrying structure.

The planetary gear train 52 comprises a first input member 54, selectively engageable and disengageable with the carrying structure 40, a second input member 56, selectively engageable and disengageable with the carrying structure, and an output member 58, connected to the differential 30, more precisely to the input member 32 of the differential.

In the example, both the first input member 54 and the second input member 56 are also selectively engageable and disengageable with the housing 22 of the drive unit 20.

The output member 58 engages with the first input member 54 and with the second input member 56 and is configured to drive the input member 32 of the differential 30.

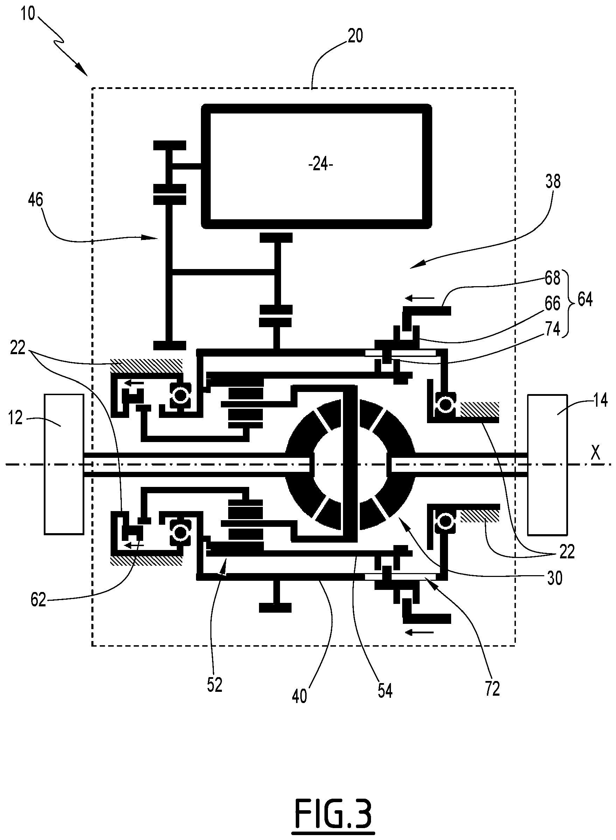

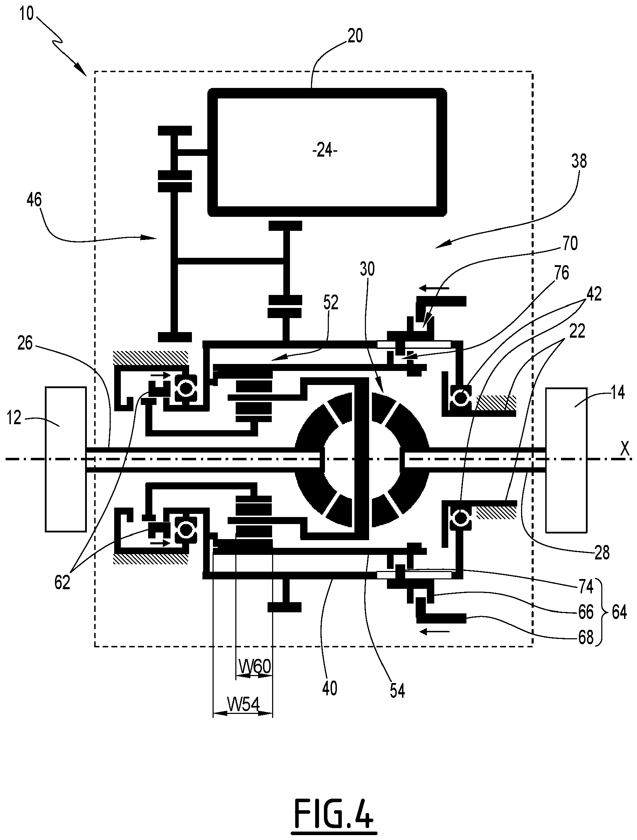

Thanks to the first input member 54 and the second input member 56 being selectively engageable and disengageable with the housing 22 and with the carrying structure 40, the planetary gear train 52 comprises four configurations: a neutral configuration, shown in Figure 1, in which the first input member 54 and the second input member 56 are disengaged from the housing 22 and from the carrying structure 40; a first ratio configuration, shown in Figure 2, in which the first input member 54 is engaged with the housing 22 and in which the second input member 56 is engaged with the carrying structure 40; a second ratio configuration, shown in Figure 3, in which the first input member 54 is engaged with the carrying structure 40 and in which the second input member 56 is engaged with the housing 22, and a third ratio configuration, shown in Figure 4, in which the first input member 54 is engaged with the carrying structure 40 and in which the second input member 56 is engaged with the carrying structure 40. In the neutral configuration of the planetary gear train 52, the electric motor 24 is thus disconnected from the differential 30 and does not drive the left and right wheels 12, 14. In the first, second and third ratio configuration of the planetary gear train 52, the electric motor 24 is connected to the differential 30, with three different reduction ratios, and drives the left and right wheels 12, 14.

In the example, the first input member 54 is a ring gearwheel of the planetary gear train 52, the second input member 56 is a sun gearwheel of the planetary gear train and the output member 58 is a planet carrier of the planetary gear train. Furthermore, the planetary gear train 52 also comprises planet gearwheels 60, mounted onto the planet carrier 58 and engaging, or meshing, with the ring gearwheel 54 and with the sun gearwheel 56. In other words, the planet carrier 58 engages with the ring gearwheel 54 and with the sun gearwheel 56 via the planet gearwheels 60.

In the example, the transmission 38 comprises an engaging member 62, rotationally coupled with the sun gearwheel 56. The sun gearwheel 56 is selectively engageable and disengageable with the housing 22 and with the carrying structure 40 thanks to the engaging member 62.

In the example, the engaging member 62 is axially moveable along the main axis X between three positions: a neutral position, shown in Figure 1, in which the sun gearwheel 56 is decoupled, or disengaged, from the housing 22 and from the carrying structure 40; a first engaged position, shown in Figures 2 and 4, in which the sun gearwheel 56 is coupled, or engaged, with the carrying structure 40 and decoupled, or disengaged, from the housing 22; and a second engaged position, shown in Figure 3, in which the sun gearwheel 56 is decoupled, or disengaged, from the carrying structure 40 and coupled, or engaged, with the housing 22.

Preferably, the engaging member 62 is moved along the main axis X by an actuator, not shown. Said actuator is a component producing a displacement of the engaging member 62 along the main axis X and is, for example, a mechanical component, controlled by a driver of the electric vehicle 10 or automatically controlled, e.g. moving the engaging member 62 via a shift fork; or a pneumatic, hydraulic or electric component, such as a pneumatic actuator, a hydraulic cylinder or an electric motor.

The transmission 38 comprises a shift assembly 64, with which the ring gearwheel 54 is selectively engageable and disengageable with the housing 22 and with the carrying structure 40. The shift assembly 64 comprises a shift ring 66, coaxially mounted around the carrying structure, more precisely around its cylindrical portion 48. The shift ring 66 is mounted to the carrying structure 40 so as to be axially moveable, along the main axis X, relative to the carrying structure and so as to be rotationally fixed, around the main axis X, relative to the carrying structure.

The shift ring 66 is axially moveable along the main axis X and engages axially with the ring gearwheel 54, i.e. cooperates with the ring gearwheel 54, so as to engage or disengage the ring gearwheel with the housing 22 and with the carrying structure 40 depending on the axial position of the shift ring 66, along the main axis X, relative to the carrying structure.

Hence, the shift ring 66 is axially moveable along the main axis X between three positions: a neutral position, shown in Figure 1, in which the ring gearwheel 54 is decoupled, or disengaged, from the housing 22 and from the carrying structure 40; a first engaged position, shown in Figure 3 and 4, in which the ring gearwheel 54 is coupled, or engaged, with the carrying structure 40 and decoupled, or disengaged, from the housing 22; and a second engaged position, shown in Figure 2, in which the ring gearwheel 54 is decoupled, or disengaged, from the carrying structure 40 and coupled, or engaged, with the housing 22.

Preferably, the shift ring 66 is moved along the main axis X by an actuator 68 of the shift assembly 64. The actuator 68 engages axially with the shift ring 66 and is operable so as to axially move the shift ring relative to the carrying structure 40 between its three positions. The actuator 68 is a component producing a displacement of the engaging member 62 along the main axis X and is, for example, a mechanical component, controlled by a driver of the electric vehicle 10 or automatically controlled, e.g. moving the engaging member 62 via a shift fork, or a pneumatic, hydraulic or electric component, such as a pneumatic actuator, a hydraulic cylinder or an electric motor. In the example of Figures 1 to 4, the actuator 68 is a mechanical actuator comprising a shift fork with two arms, each arm engaging with a groove 70 of the shift ring 66. In other words, the actuator 68 acts on the shift ring 66 via a shift fork.

In the example of Figures 1 to 4, the ring gearwheel 54 is axially moveable, along the main axis X, relative to the carrying structure 40, and the shift assembly 64 is configured to axially move the ring gearwheel 54 relative to the carrying structure 40 so as to engage or disengage the ring gearwheel with the carrying structure and with the housing 22. In other words, the ring gearwheel 54 moves as a whole. Hence, in the example of Figures 1 to 4, the ring gearwheel 54 moves axially relative to the planet gearwheels 60 under the effect of the shift assembly 64. As visible on the figures, a width W54 of teeth of the ring gearwheel 54 is greater than a width W60 of teeth of the planet gearwheels 60, so that the ring gearwheel is always meshing with the planet gearwheels 60, regardless of the axial position of the ring gearwheel.

The carrying structure 40 comprises at least one axial slot 72, through which the shift assembly 64 extends to cooperate with the ring gearwheel 54, to axially move the ring gearwheel so as to engage or disengage the ring gearwheel with the carrying structure and with the housing 22. In the example of Figures 1 to 4, the carrying structure 40 comprises four axial slots 72. The axial slots 72 extend parallel to the main axis X and are formed in the cylindrical portion 48 of the carrying structure.

Furthermore, the shift assembly 64 comprises a sliding assembly 74, fixed to the shift ring 66 and extending from the shift ring through the axial slots 72 of the carrying structure 40 so as to be received inside of the carrying structure, i.e. within the internal volume V40. The sliding assembly 74 is configured to cooperate with the ring gearwheel 54 so as to engage or disengage the ring gearwheel with the carrying structure 40 and with the housing 22. Preferably, the sliding assembly 74 directly engages with the ring gearwheel 54 so as to axially move the ring gearwheel along the main axis X and engage or disengage the ring gearwheel with the carrying structure and with the housing.

The shift ring 66 is guided in its translation movement along the main axis X by cooperation of shape with the carrying structure 40: the shape of shift ring and of the carrying structure 40 only allow a translation of the shift ring along the main axis X and a rotation of the shift ring around the main axis X, relative to the carrying structure 40, and the sliding assembly 74 extending through the axial slots 72 prevent the rotation of the shift ring around the main axis X relative to the carrying structure 40. Hence, the shift ring 66 can only move in translation along the main axis X and an actuator 68 acting on the shift ring via a simple shift fork is sufficient to operate the shift ring.

Preferably, the ring gearwheel 54 comprises a groove 76, in which the sliding assembly 74 extends and therefore directly engages axially with the groove 76 of the ring gearwheel so as to axially move the ring gearwheel.

In the example of Figures 1 to 4, the sliding assembly 74 comprises pins, which are integral with the shift ring 66 or fixed to the shift ring, each pin extending through an axial slot 72 and extending in the groove 76 of the ring gearwheel 54.

Thanks to the carrying structure 40, in which the differential 30 and the planetary gear train 52 are mounted, and thanks to the shift assembly 64, the drive unit 20 is particularly compact, along the main axis. In particular, the differential 30 and the planetary gear train 52 are not projecting beyond the carrying structure 40, along the main axis X, saving axial space compared to traditional drive units. In addition, the shift assembly 64 allows selectively engaging and disengaging the ring gearwheel 54 with the carrying structure 40 and with the housing 22 without needing additional axial space. Indeed, the shift ring 66 is mounted around the carrying structure and therefore does not project beyond the carrying structure, along the main axis X. Because the sliding assembly 74 extends from the shift ring 66 towards the ring gearwheel 54 through the axial slots 74 of the carrying structure 40, there is no need for the shift assembly 64 to project beyond the carrying structure, along the main axis X, to cooperate with the ring gearwheel.

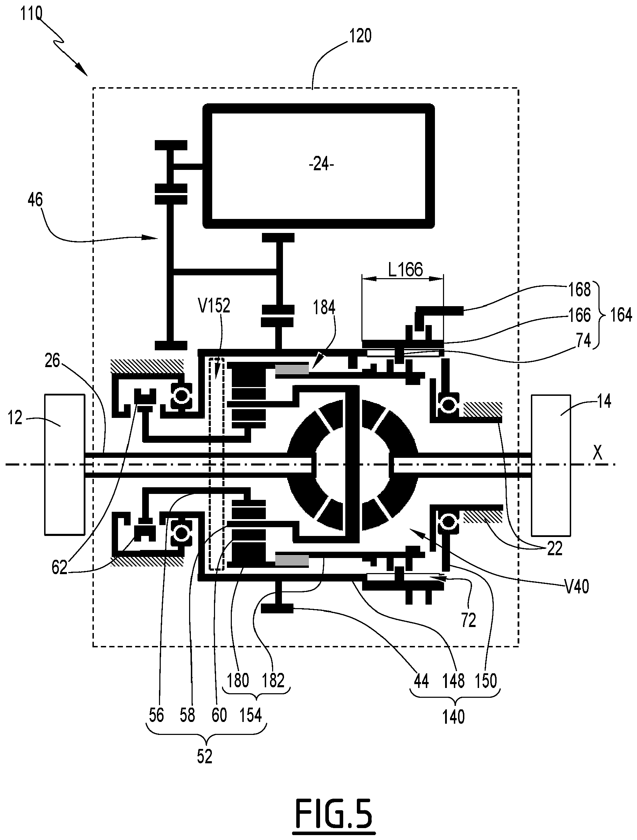

An electric vehicle 110 according to a second example, an electric vehicle 210 according to a third example and an electric vehicle 310 according to a fourth example are now described, with reference to Figure 5, Figure 6 and Figure 7 respectively. In the electric vehicles 110, 210, 310 according to the second, third and fourth examples, elements similar to those in the electric vehicle 10 of the first example have the same references and function in the same way. If a reference is used in the description of the electric vehicles according to the second to fourth examples without being reproduced on the corresponding figures, it corresponds to the part or component bearing the same reference in the electric vehicle 10 of the first example, illustrated in Figures 1 to 4. In the following, the differences between each example and the preceding one(s) will be described.

The electric vehicle 110 according to the second example comprises a drive unit 120 that differs from drive unit 20 of the electric vehicle 10 according to the first example on three unrelated aspects.

A first difference between the drive unit 120 and the drive unit 20 is that the drive unit 120 comprises a carrying structure 140 which operates as the carrying structure 40, but which comprises a cylindrical portion 148 and an end plate 150 fixed to the cylindrical portion 148. Hence, the carrying structure 140 differs from the carrying structure 40 in that the cylindrical portion 148 and the end plate 150 are not integral. The end plate 150 is fixed to the cylindrical portion 148 for example with fasteners or by welding.

Having a carrying structure 40 made of two separate parts fixed together facilitates the assembly of the drive unit 120, because the planetary gear train and the differential can easily be inserted within the cylindrical portion 148 prior to the assembly of the end plate 150. The manufacturing cost of the drive unit 120 is thus reduced.

A second difference between the drive unit 120 and the drive unit 20 is that the drive unit 120 comprises a shift assembly 164 with a shift ring 166 and an actuator 168, which operates as the shift assembly 64 of the drive unit 20, but which differs from the shift assembly 64 in that the actuator 168 is a mechanical actuator operating like a shift fork, but with only one arm engaging with the groove 70 of the shift ring 166. Hence, the actuator 168 comprises only one arm instead of two arms like the actuator 68. In particular, this is made possible by the shift ring 166 being wider, along the main axis X, compared to the shift ring 66. The shift ring 166 is therefore better guided in translation along the main axis X relative to the carrying structure 140, so that only one arm is sufficient to move the shift ring in translation along the main axis X.

The drive unit 120 comprises a planetary gear train 152, with a first input member 154, a sun gearwheel 56, a planet carrier 58 and planet gearwheels 60, which is operating as the planetary gear train 52 of the drive unit 20.

A third difference between the drive unit 120 and the drive unit 20 is that the first input member 154 comprises a planetary input member 180 and an engaging sleeve 182 and is therefore not one-piece as the ring gearwheel 54 is. The first input member 154, more precisely its planetary input member 180, is a ring gearwheel of the planetary gear train 152.

The planetary input member 180 is concentrically mounted inside of the carrying structure and engages, i.e. meshes, with the planet gearwheels 60 of the planetary gear train 152. In other words, the planetary input member 180 engages with the output member 58, i.e. the planet carrier 58, via the planet gearwheels 60. Furthermore, the planetary input member 180 is not axially moveable along the main axis X. Hence a width of teeth of the planetary input member 180 does not need to be greater than the width W60 of teeth of the planet gearwheels 60.

The engaging sleeve 182 is concentrically mounted inside of the carrying structure 140 and axially moveable relative to the carrying structure, along the main axis X, so as to be selectively engageable and disengageable with the carrying structure 140 and with the housing 22. Hence, the shift assembly 164 is configured to axially move the engaging sleeve 182 so as to engage or disengage the engaging sleeve with the carrying structure or with the housing. In other words, in the drive unit 120, the first input member 154 is not axially moveable along the main axis X as a whole, but only the engaging sleeve 182 of the first input member is axially moveable along the main axis X.

In addition, the engaging sleeve 182 engages with the planetary input member 180 so as to be rotationally fixed relative to the planetary input member 180. Hence, the planetary input member 180 can be engaged or disengaged with the carrying structure 140 or with the housing 22 via the engaging sleeve 182. In the example of Figure 5, the engaging sleeve 182 engages with the planetary input member 180 through a spline joint 184 of the first input member 154. Hence, thanks to the spline joint 184, the planetary input member 180 and the engaging sleeve 182 are rotationally coupled but can move relative to each other along the main axis X.

The first input member 154 of the planetary gear train 152 of the drive unit 120 is particularly advantageous to increase the axial compactness of the drive unit 120. Indeed, compared to the drive unit 20 of Figures 1 to 4, the planetary gear train 152 frees up a space V 152 alongside the first input member 154. This space is freed, in particular, thanks to the reduced width of the teeth of the planetary input member 180, compared to the teeth of the ring gearwheel 54.

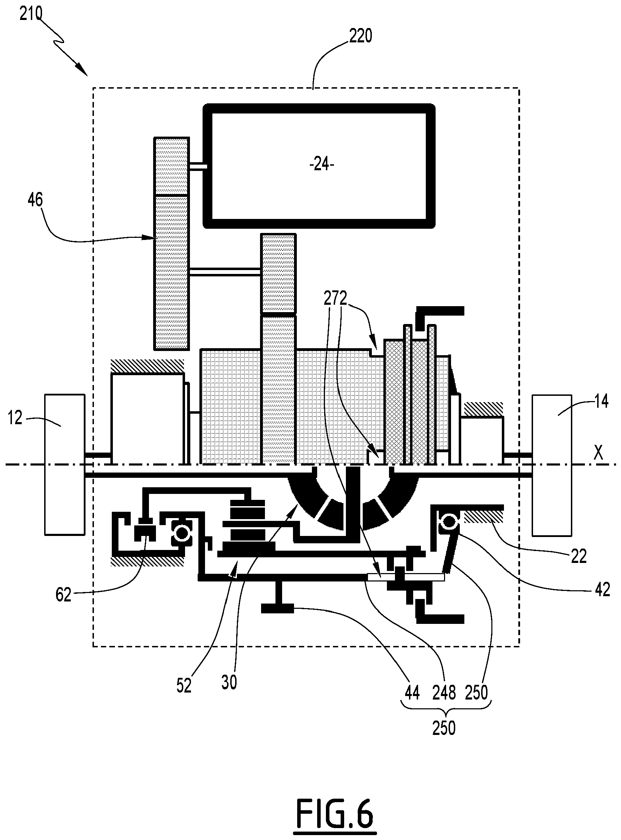

In Figure 6, the drive unit 220 of the electric vehicle 210 is partially shown in top view, above the main axis X, and partially shown in schematic view, below the main axis X.

The electric vehicle 210 according to the third example comprises a drive unit 220 that differs from drive unit 20 of the electric vehicle 10 according to the first example on two unrelated aspects.

A first difference between the drive unit 220 and the drive unit 20 is that the drive unit 220 comprises a carrying structure 240 which operates as the carrying structure 40, but which comprises a cylindrical portion 248 and an end plate 250 fixed to the cylindrical portion 248. Hence, the carrying structure 240 differs from the carrying structure 40 in that the cylindrical portion 248 and the end plate 250 are not integral. The end plate 250 is fixed to the cylindrical portion 248 for example with fasteners or by welding.

In addition, the end plate 250 is conical, i.e. has a conical shape, more precisely a conical frustum shape. In the example of Figure 6, the end plate 250 converges away from the cylindrical portion 248. The conical shape of the end plate 250 increases the axial stiffness of the end plate 250, thus making the drive unit 220 more robust and more reliable.

A second difference between the drive unit 220 and the drive unit 20 is that the carrying structure 240 comprises at least one axial slot 272, in the example four axial slots 272, which extend parallel to the main axis X, which are formed in the cylindrical portion 248 of the carrying structure and which opens out at the axial extremity of the cylindrical portion closed by the end plate 250. In other words, the axial slots 272 are open along the main axis X, whereas the axial slots 72 of the carrying structure 40 of the drive unit 20 do not open along the main axis X. Having axial slots 272 opening along the main axis X facilitates assembly of the drive unit 220, especially of the shift assembly 64 with the ring gearwheel 54 and with the carrying structure 240.

The electric vehicle 310 according to the fourth example comprises a drive unit 320 that differs from drive unit 20 of the electric vehicle 10 according to the first example in that it comprises a shift assembly 364 which operates as the shift assembly 64 but which is constructed differently.

The shift assembly 364 comprises a shift ring 366, an actuator 68 and a sliding assembly 374 which operate similarly to the shift ring 66, the actuator 68 and the sliding assembly 74 of the drive unit 20. The sliding assembly 374 comprises sliding pads 390 and fasteners 392, for example four sliding pads 390 and four fasteners 392.

The sliding pads 390 are received inside of the carrying structure 40, i.e. within the internal volume V40 of the carrying structure. The sliding pads 390 are configured to cooperate with the first input member 54 so as to engage the first input member with the carrying structure 40 and with the housing 22. In the example, the sliding pads 390 are received in the groove 76 of the first input member 54. Therefore, the sliding pads 390 directly engage with the groove 76 so as to axially move the first input member 54.

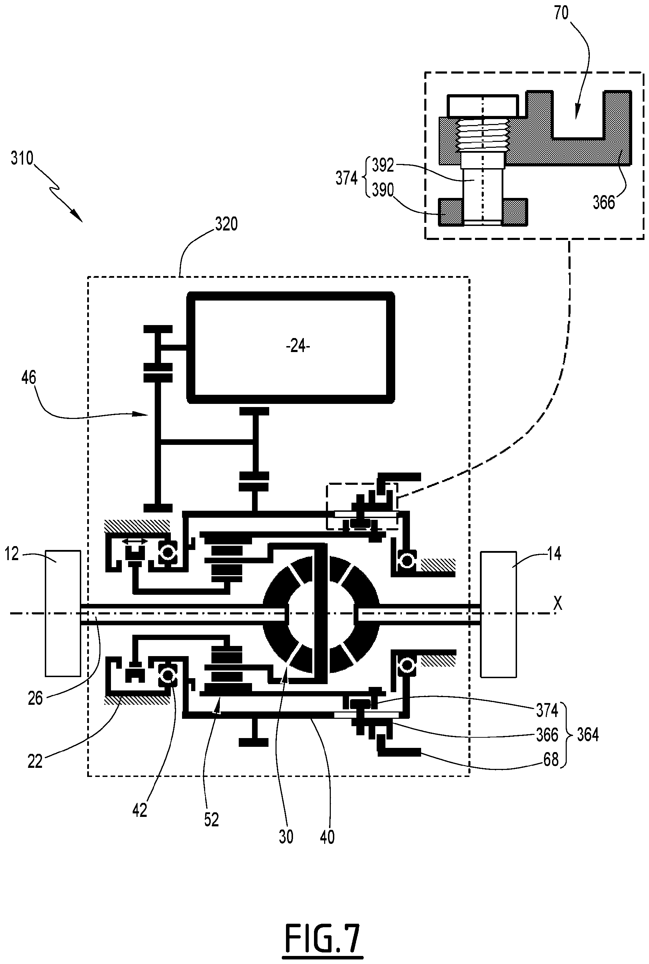

The fasteners 392 extend through the axial slots 72 of the carrying structure 40 and are fixing together the sliding pads 390 with the shift ring 366. More precisely, each fastener 392 allows fixing together one of the sliding pads 390 with the shift rig 366. In the example, the fasteners 392 are bolts, each of which are fastened to the shift ring 366 and each of which are received in an opening of the corresponding sliding pad 390. In the example of Figure 7, the fasteners 392 are flat head bolts. As an alternative, not shown, the fasteners 392 are conical head bolts, with at least one portion of the conical head being received in a conical recess of the shift ring 366, thus reducing mechanical stress applied to threads of the bolts parallel to the main axis X.

Having a sliding assembly 374 comprising sliding pads 390 and fasteners 392 is particularly advantageous to facilitate the assembly of the drive unit 320 and, in particular, the assembly of the shift assembly 364 with the carrying structure 40 and with the first input member 54. Indeed, the sliding pads 390 can firstly be positioned in the groove 76 of the first input member 54, then the first input member 54 can be inserted inside of the carrying structure 40, then the shift ring 366 can be mounted around the carrying structure 40 and finally the shift ring 366 can be fixed with the sliding pads 390 with the fasteners 392, by aligning the sliding pads 390 with the axial slots 72 of the carrying structure and by fastening the fasteners onto the shift ring 366.

As an alternative, not shown, the sliding pads 390 are replaced with an open sliding ring, extending in the groove 76 of the first input member 54 on a portion of the circumference of the groove 76, for example of two-thirds of the circumference of the groove. Said sliding ring is fixed with the shift ring 366 with the fasteners 392.

Example 1: a drive unit, for an electric vehicle, the drive unit comprising:
- an electric motor,
- a left drive shaft and a right drive shaft, configured to drive wheels of the electric vehicle,
- a differential, coaxially mounted with the left and right drive shafts and configured to drive the left and right drive shafts, and
- a transmission, connected to the electric motor and to the differential so as to be driven by the electric motor and so as to drive the differential,
wherein the transmission comprises:
- a carrying structure, coaxially mounted around the left and right drive shafts, the carrying structure being connected to the electric motor so as to be driven by the electric motor,
- a planetary gear train, coaxially mounted around one of the left and right drive shafts, the planetary gear train comprising:
   ∘ a first input member, selectively engageable and disengageable with the carrying structure,
   ∘ a second input member, selectively engageable and disengageable with the carrying structure, and
   ∘ an output member, connected to the differential so as to drive the differential, the output member engaging with the first input member and with the second input member,
- a shift assembly, comprising a shift ring, the shift ring being coaxially mounted around the carrying structure, the shift ring being mounted to the carrying structure so as to be axially moveable relative to the carrying structure and rotationally fixed relative to the carrying structure, the shift assembly being configured to cooperate with the first input member of the planetary gear train so as to engage or disengage the first input member with the carrying structure depending on the axial position of the shift ring relative to the carrying structure,
and wherein the differential and the planetary gear train are mounted inside of the carrying structure.

Example 2: the drive unit of example 1, further comprising a housing and wherein the first input member and the second input member are both selectively engageable and disengageable with the housing.

Example 3: the drive unit of example 2, further comprising bearings with which the carrying structure is rotatably mounted on the housing of the drive unit.

Example 4: the drive unit of any one of examples 2-3, wherein the shift ring is moveable between three positions:
- a first position, in which the first input member is engaged with the carrying structure,
- a second position, in which the input member is engaged with the housing, and
- a neutral position, in which the first input member is disengaged with the carrying structure and disengaged with the housing.

Example 5: the drive unit of any one of examples 1-4, wherein the first input member is a ring gearwheel of the planetary gear train, wherein the second input member is a sun gearwheel of the planetary gear train and wherein the output member is a planet carrier of the planetary gear train.

Example 6: the drive unit of any one of examples 1-5, wherein the transmission further comprises a gear train, connected to the electric motor so as to be driven by the electric motor and wherein the carrying structure comprises a gearwheel, engaging with the gear train so as to be driven by the gear train.

Example 7: the drive unit of any one of examples 1-6, wherein the shift assembly comprises an actuator engaging with the shift ring, the actuator being moveable so as to axially move the shift ring relative to the carrying structure.

Example 8: the drive unit of example 7, wherein the actuator comprises a shift fork.

Example 9: the drive unit of any one of examples 1-8, wherein the first input member is axially moveable relative to the carrying structure and wherein the shift assembly is configured to axially move the first input member relative to the carrying structure so as to engage or disengage the first input member with the carrying structure.

Example 10: the drive unit of any one of examples 1-8, wherein the first input member comprises a planetary input member and an engaging sleeve, wherein the planetary input member is concentrically mounted inside of the carrying structure, engaging with the output member and axially fixed relative to the carrying structure, wherein the engaging sleeve is concentrically mounted inside of the carrying structure and axially moveable relative to the carrying structure so as to be selectively engageable and disengageable with the carrying structure, wherein the engaging sleeve engages with the planetary input member so as to be rotationally fixed relative to the planetary input member and wherein the shift assembly is configured to axially move the engaging sleeve so as to engage or disengage the engaging sleeve with the carrying structure.

Example 11: the drive unit of example 10, wherein the engaging sleeve engages with the planetary input member through a spline joint of the first input member.

Example 12: the drive unit of any one of examples 1-11, wherein the carrying structure comprises an axial slot and wherein the shift assembly extends through the axial slot to cooperate with the first input member of the planetary gear train.

Example 13: the drive unit of example 12, wherein the shift assembly comprises a sliding assembly fixed to the shift ring and extending from the shift ring through the axial slot of the carrying structure so as to be received inside of the carrying structure, the sliding assembly being configured to cooperate with the first input member so as to engage or disengage the first input member with the carrying structure.

Example 14: the drive unit of example 13, wherein the sliding assembly comprises sliding pads, received inside of the carrying structure and configured to cooperate with the first input member so as to engage or disengage the first input member with the carrying structure, and fasteners, the fasteners extending through the axial slot and fixing together the sliding pads and the shift ring.

Example 15: the drive unit of any one of examples 13-14, wherein the first input member is axially moveable relative to the carrying structure and wherein the sliding assembly directly engages with the first input member, or with the engaging sleeve, so as to axially move the first input member, or the engaging sleeve, to engage or disengage the first input member, or the engaging sleeve, with the carrying structure.

Example 16: the drive unit of example 15, wherein the first input member comprises a groove in which the sliding assembly is received and wherein the sliding assembly directly engages with the groove so as to axially move the first input member to engage or disengage the first input member with the carrying structure.

Example 17: the drive unit of any one of examples 12-16, wherein the carrying structure comprises a cylindrical portion, around which the shift ring is coaxially mounted, and an end plate, fixed to the cylindrical portion and closing an axial extremity of the cylindrical portion, one of the left and right drive shafts extending through the end plate and wherein the axial slot is formed in the cylindrical portion of the carrying structure and opens out at said axial extremity of the cylindrical portion.

Example 18: the drive unit of any one of examples 1-16, wherein the carrying structure comprises a cylindrical portion, around which the shift ring is coaxially mounted, and an end plate, fixed to the cylindrical portion and closing an axial extremity of the cylindrical portion, one of the left and right drive shafts extending through the end plate.

Example 19: the drive unit of example 18, wherein the end plate is conical.

Example 20: an electric vehicle, comprising a left wheel, a right wheel and the drive unit of any one of examples 1-19, wherein the left wheel and the right wheel are driven respectively by the left drive shaft and by the right drive shaft of the drive unit.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A drive unit (20; 120; 220; 320), for an electric vehicle (10; 110; 210; 310), the drive unit comprising:
- an electric motor (24),
- a left drive shaft (26) and a right drive shaft (28), configured to drive wheels (12, 14) of the electric vehicle (10; 110; 210; 310),
- a differential (30), coaxially mounted with the left drive shaft and the right drive shaft and configured to drive the left drive shaft and the right drive shaft, and
- a transmission (38), connected to the electric motor (24) and to the differential (30) so as to be driven by the electric motor and so as to drive the differential,
wherein the transmission (38) comprises:
- a carrying structure (40; 140; 240), coaxially mounted around the left drive shaft (26) and the right drive shaft (28), the carrying structure being connected to the electric motor (24) so as to be driven by the electric motor,
- a planetary gear train (52; 152), coaxially mounted around one of the left drive shaft (26) and the right drive shaft (28), the planetary gear train comprising:
∘ a first input member (54; 154), selectively engageable and disengageable with the carrying structure (40; 140; 240),
∘ a second input member (56), selectively engageable and disengageable with the carrying structure, and
∘ an output member (58), connected to the differential (30) so as to drive the differential, the output member engaging with the first input member and with the second input member,
- a shift assembly (64; 164; 364), comprising a shift ring (66; 166; 366), the shift ring being coaxially mounted around the carrying structure (40; 140; 240), the shift ring being mounted to the carrying structure so as to be axially moveable relative to the carrying structure and rotationally fixed relative to the carrying structure, the shift assembly being configured to cooperate with the first input member (54; 154) of the planetary gear train (52; 152) so as to engage or disengage the first input member with the carrying structure depending on the axial position of the shift ring relative to the carrying structure,
and wherein the differential (30) and the planetary gear train (52; 152) are mounted inside of the carrying structure (40; 140; 240).

2. The drive unit (20; 120; 220; 320) of claim 1, further comprising a housing (22) and wherein the first input member (54; 154) and the second input member (56) are both selectively engageable and disengageable with the housing.

3. The drive unit (20; 120; 220; 320) of claim 2, wherein the shift ring (66; 166; 366) is moveable between three positions:
- a first position, in which the first input member (54; 154) is engaged with the carrying structure (40; 140; 240),
- a second position, in which the input member is engaged with the housing (22), and
- a neutral position, in which the first input member is disengaged with the carrying structure and disengaged with the housing.

4. The drive unit (20; 120; 220; 320) of any one of claims 1-3, wherein the first input member (54; 154) is a ring gearwheel of the planetary gear train (52; 152), wherein the second input member (56) is a sun gearwheel of the planetary gear train and wherein the output member (58) is a planet carrier of the planetary gear train.

5. The drive unit (20; 120; 220; 320) of any one of claims 1-4, wherein the transmission (38) further comprises a gear train (46), connected to the electric motor (24) so as to be driven by the electric motor and wherein the carrying structure (40; 140; 240) comprises a gearwheel (44), engaging with the gear train so as to be driven by the gear train.

6. The drive unit (20; 120; 220; 320) of any one of claims 1-5, wherein the shift assembly (64; 164; 364) comprises an actuator (68; 168) engaging with the shift ring (66; 166; 366), the actuator being operable so as to axially move the shift ring relative to the carrying structure (40; 140; 240).

7. The drive unit (20; 120; 220; 320) of any one of claims 1-6, wherein the first input member (54) is axially moveable relative to the carrying structure (40; 140; 240) and wherein the shift assembly (64; 164; 364) is configured to axially move the first input member relative to the carrying structure so as to engage or disengage the first input member with the carrying structure.

8. The drive unit (20; 120; 220; 320) of any one of claims 1-7, wherein the first input member (154) comprises a planetary input member (180) and an engaging sleeve (182), wherein the planetary input member (180) is concentrically mounted inside of the carrying structure (40; 140; 240), engaging with the output member (58) and axially fixed relative to the carrying structure, wherein the engaging sleeve (182) is concentrically mounted inside of the carrying structure and axially moveable relative to the carrying structure so as to be selectively engageable and disengageable with the carrying structure, wherein the engaging sleeve engages with the planetary input member (180) so as to be rotationally fixed relative to the planetary input member, wherein the shift assembly (64; 164; 364) is configured to axially move the engaging sleeve so as to engage or disengage the engaging sleeve with the carrying structure and wherein, preferably, the engaging sleeve (182) engages with the planetary input member (180) through a spline joint (184) of the first input member (154).

9. The drive unit (20; 120; 220; 320) of any one of claims 1-8, wherein the carrying structure (40; 140; 240) comprises an axial slot (72; 272) and wherein the shift assembly (64; 164; 364) extends through the axial slot to cooperate with the first input member (54; 154) of the planetary gear train (52; 152).

10. The drive unit (20; 120; 220; 320) of claim 9, wherein the shift assembly (64; 164; 364) comprises a sliding assembly (74; 374) fixed to the shift ring (66; 166; 366) and extending from the shift ring through the axial slot (72; 272) of the carrying structure (40; 140; 240) so as to be received inside of the carrying structure, the sliding assembly being configured to cooperate with the first input member (54; 154) so as to engage or disengage the first input member with the carrying structure.

11. The drive unit (20; 120; 220; 320) of claim 10, wherein the sliding assembly (374) comprises sliding pads (390), received inside of the carrying structure (40; 140; 240) and configured to cooperate with the first input member (54; 154) so as to engage or disengage the first input member with the carrying structure, and fasteners (392), the fasteners extending through the axial slot (72; 272) and fixing together the sliding pads (390) and the shift ring (366).

12. The drive unit (20; 120; 220; 320) of any one of claims 9-11, wherein the carrying structure (240) comprises a cylindrical portion (248), around which the shift ring (66; 166; 366) is coaxially mounted, and an end plate (250), fixed to the cylindrical portion and closing an axial extremity of the cylindrical portion, one of the left drive shaft (26) and right drive shaft (28) extending through the end plate (250) and wherein the axial slot (272) is formed in the cylindrical portion (248) of the carrying structure (240) and opens out at said axial extremity of the cylindrical portion.

13. The drive unit (20; 120; 220; 320) of any one of claims 1-12, wherein the carrying structure (40; 140; 240) comprises a cylindrical portion (48; 148; 248), around which the shift ring (66; 166; 366) is coaxially mounted, and an end plate (50; 150; 250), closing an axial extremity of the cylindrical portion, one of the left drive shaft (26) and right drive shaft (28) extending through the end plate.

14. The drive unit (20; 120; 220; 320) of claim 13, wherein the end plate (250) is conical.

15. An electric vehicle (10; 110; 210; 310), comprising a left wheel (12), a right wheel (14) and the drive unit (20; 120; 220; 320) of any one of claims 1-14, wherein the left wheel (12) and the right wheel (14) are driven respectively by the left drive shaft (26) and by the right drive shaft (28) of the drive unit (20; 120; 220; 320).

## Amended claims

### Amended claims in accordance with Rule 137(2) EPC.

1. A drive unit (20; 120; 220; 320), for an electric vehicle (10; 110; 210; 310), the drive unit comprising:
- an electric motor (24),
- a left drive shaft (26) and a right drive shaft (28), configured to drive wheels (12, 14) of the electric vehicle (10; 110; 210; 310),
- a differential (30), coaxially mounted with the left drive shaft and the right drive shaft and configured to drive the left drive shaft and the right drive shaft, and
- a transmission (38), connected to the electric motor (24) and to the differential (30) so as to be driven by the electric motor and so as to drive the differential,
wherein the transmission (38) comprises:
- a carrying structure (40; 140; 240), coaxially mounted around the left drive shaft (26) and the right drive shaft (28), the carrying structure being connected to the electric motor (24) so as to be driven by the electric motor,
- a planetary gear train (52; 152), coaxially mounted around one of the left drive shaft (26) and the right drive shaft (28), the planetary gear train comprising:
o a first input member (54; 154), selectively engageable and disengageable with the carrying structure (40; 140; 240),
o a second input member (56), selectively engageable and disengageable with the carrying structure, and
o an output member (58), connected to the differential (30) so as to drive the differential, the output member engaging with the first input member and with the second input member,
- a shift assembly (64; 164; 364),
wherein the differential (30) and the planetary gear train (52; 152) are mounted inside of the carrying structure (40; 140; 240),
**characterized in that** the shift assembly comprises a shift ring (66; 166; 366), the shift ring being coaxially mounted around the carrying structure (40; 140; 240), the shift ring being mounted to the carrying structure so as to be axially moveable relative to the carrying structure and rotationally fixed relative to the carrying structure, the shift assembly being configured to cooperate with the first input member (54; 154) of the planetary gear train (52; 152) so as to engage or disengage the first input member with the carrying structure depending on the axial position of the shift ring relative to the carrying structure..

2. The drive unit (20; 120; 220; 320) of claim 1, further comprising a housing (22) and wherein the first input member (54; 154) and the second input member (56) are both selectively engageable and disengageable with the housing.

3. The drive unit (20; 120; 220; 320) of claim 2, wherein the shift ring (66; 166; 366) is moveable between three positions:
- a first position, in which the first input member (54; 154) is engaged with the carrying structure (40; 140; 240),
- a second position, in which the input member is engaged with the housing (22), and
- a neutral position, in which the first input member is disengaged with the carrying structure and disengaged with the housing.

4. The drive unit (20; 120; 220; 320) of any one of claims 1-3, wherein the first input member (54; 154) is a ring gearwheel of the planetary gear train (52; 152), wherein the second input member (56) is a sun gearwheel of the planetary gear train and wherein the output member (58) is a planet carrier of the planetary gear train.

5. The drive unit (20; 120; 220; 320) of any one of claims 1-4, wherein the transmission (38) further comprises a gear train (46), connected to the electric motor (24) so as to be driven by the electric motor and wherein the carrying structure (40; 140; 240) comprises a gearwheel (44), engaging with the gear train so as to be driven by the gear train.

6. The drive unit (20; 120; 220; 320) of any one of claims 1-5, wherein the shift assembly (64; 164; 364) comprises an actuator (68; 168) engaging with the shift ring (66; 166; 366), the actuator being operable so as to axially move the shift ring relative to the carrying structure (40; 140; 240).

7. The drive unit (20; 120; 220; 320) of any one of claims 1-6, wherein the first input member (54) is axially moveable relative to the carrying structure (40; 140; 240) and wherein the shift assembly (64; 164; 364) is configured to axially move the first input member relative to the carrying structure so as to engage or disengage the first input member with the carrying structure.

8. The drive unit (20; 120; 220; 320) of any one of claims 1-7, wherein the first input member (154) comprises a planetary input member (180) and an engaging sleeve (182), wherein the planetary input member (180) is concentrically mounted inside of the carrying structure (40; 140; 240), engaging with the output member (58) and axially fixed relative to the carrying structure, wherein the engaging sleeve (182) is concentrically mounted inside of the carrying structure and axially moveable relative to the carrying structure so as to be selectively engageable and disengageable with the carrying structure, wherein the engaging sleeve engages with the planetary input member (180) so as to be rotationally fixed relative to the planetary input member, wherein the shift assembly (64; 164; 364) is configured to axially move the engaging sleeve so as to engage or disengage the engaging sleeve with the carrying structure and wherein, preferably, the engaging sleeve (182) engages with the planetary input member (180) through a spline joint (184) of the first input member (154).

9. The drive unit (20; 120; 220; 320) of any one of claims 1-8, wherein the carrying structure (40; 140; 240) comprises an axial slot (72; 272) and wherein the shift assembly (64; 164; 364) extends through the axial slot to cooperate with the first input member (54; 154) of the planetary gear train (52; 152).

10. The drive unit (20; 120; 220; 320) of claim 9, wherein the shift assembly (64; 164; 364) comprises a sliding assembly (74; 374) fixed to the shift ring (66; 166; 366) and extending from the shift ring through the axial slot (72; 272) of the carrying structure (40; 140; 240) so as to be received inside of the carrying structure, the sliding assembly being configured to cooperate with the first input member (54; 154) so as to engage or disengage the first input member with the carrying structure.

11. The drive unit (20; 120; 220; 320) of claim 10, wherein the sliding assembly (374) comprises sliding pads (390), received inside of the carrying structure (40; 140; 240) and configured to cooperate with the first input member (54; 154) so as to engage or disengage the first input member with the carrying structure, and fasteners (392), the fasteners extending through the axial slot (72; 272) and fixing together the sliding pads (390) and the shift ring (366).

12. The drive unit (20; 120; 220; 320) of any one of claims 9-11, wherein the carrying structure (240) comprises a cylindrical portion (248), around which the shift ring (66; 166; 366) is coaxially mounted, and an end plate (250), fixed to the cylindrical portion and closing an axial extremity of the cylindrical portion, one of the left drive shaft (26) and right drive shaft (28) extending through the end plate (250) and wherein the axial slot (272) is formed in the cylindrical portion (248) of the carrying structure (240) and opens out at said axial extremity of the cylindrical portion.

13. The drive unit (20; 120; 220; 320) of any one of claims 1-12, wherein the carrying structure (40; 140; 240) comprises a cylindrical portion (48; 148; 248), around which the shift ring (66; 166; 366) is coaxially mounted, and an end plate (50; 150; 250), closing an axial extremity of the cylindrical portion, one of the left drive shaft (26) and right drive shaft (28) extending through the end plate.

14. The drive unit (20; 120; 220; 320) of claim 13, wherein the end plate (250) is conical.

15. An electric vehicle (10; 110; 210; 310), comprising a left wheel (12), a right wheel (14) and the drive unit (20; 120; 220; 320) of any one of claims 1-14, wherein the left wheel (12) and the right wheel (14) are driven respectively by the left drive shaft (26) and by the right drive shaft (28) of the drive unit (20; 120; 220; 320).
